**Europäisches Patentamt**

**European Patent Office**

**Office européen des brevets**

(19)

(11) Publication number: **0 129 999**

**A2**

(12) # EUROPEAN PATENT APPLICATION

(21) Application number: **84303803.5**

(22) Date of filing: **05.06.84**

(51) Int. Cl.⁴: **B 01 J 8/00**
**B 01 J 8/12, B 01 J 8/42**

(30) Priority: **17.06.83 US 505299**

(43) Date of publication of application:
**02.01.85 Bulletin 85/1**

(84) Designated Contracting States:
**AT BE CH DE FR GB IT LI LU NL SE**

(71) Applicant: **Exxon Research and Engineering Company**
**P.O.Box 390 180 Park Avenue**
**Florham Park New Jersey 07932(US)**

(72) Inventor: **Reiter, Thomas Agens**
**2418 Oak Bank**
**Kingwood Texas(US)**

(72) Inventor: **Wu, Tronze-I Dennis**
**8422 Bunker Bend Drive**
**Humble Texas(US)**

(74) Representative: **Northover, Robert Frank et al,**
**ESSO Chemical Limited Esso Chemical Research Centre**
**P.O. Box 1**
**Abingdon Oxfordshire, OX13 6BB(GB)**

(54) **A dense phase hydraulic lift process.**

(57) A hydraulic process is provided for transporting a dense phase of solid particles in a liquid medium by use of a U-shaped transport line combined with injecting an amount of liquid into the transport line effective to reduce the density of solid particles to provide sufficient pressure in the transport line to lift the solids.

FIG. I

EP 0 129 999 A2

## A DENSE PHASE HYDRAULIC LIFT PROCESS

A number of process systems employ fluid solid particles in which the solid particles need to be transported and lifted from the bottom of a column back to the top of the same column or to the top of a different column. Processes which employ such fluid solid particles include catalytic processes, adsorption-desorption separation processes, coal liquification, etc. These solid particles can be maintained in a fluid state by fluidization with gas or liquid or by maintaining the solid particles in a slurry. Commonly, to transport such fluid solid particles either slurry pumps, pneumatic transports or dilute phase hydraulic transports are used. However, one drawback encountered with these transport methods is that excessive attrition of the solid particles is caused due to the mechanical moving parts of the pump or the high velocity turbulence under which the solid particles are subjected to during transportation.

Indicative of prior art transport systems is U.S. Patent 1,598,558 in which granular material is fed into a device where it is first struck by liquid which passes by at a considerable velocity and then air under pressure is also injected to force the granular materal along. Another high velocity pneumatic-type of transport is described in U.S. Patent 2,575,258 where catalyst solids flowing downward are met by a blast of gas which causes the catalyst solids to flow up a line to a regeneration vessel. This type of pneumatic transport is still common as is described in U.S. Patent 4,247,987 in which descending magnetically stabilized fluidized particles upon leaving one vessel are transferred to another vessel via a stand pipe and transfer pipe facilitated by a lift gas. While these processes are effective to transport the fluid solid particles, one drawback is the rough handling these solid particles receive which can cause attrition of the solid particles. In processes where the solid particles need to be continually used and structural integrity of the solid particles is important, attrition has become a serious problem. Examples of such processes include catalytic processes, adsorption-desorption separation processes, etc. in which a catalyst or adsorbent particle is reused and where the process employs fluidized beds or magnetically stabilized fluidized beds.

SUMMARY OF THE INVENTION

Briefly, this invention involves a hydraulic lift process for continuously and uniformly transporting a dense phase of solid particles in a liquid medium from the bottom of a column to the top of a column while minimizing the attrition of the solid particles. This process is carried out by feeding the dense phase from the column to a transport line which is initially directed downward and which has a smooth curved U-shape at the bottom to direct the flow of the dense phase to the top of the column. The flow of the dense phase in the transport line is achieved by injecting into the transport line in the direction of the flow an amount of fluid effective to reduce the density of the solid particles in the dense phase to provide sufficient pressure to lift the solids to the top of the column, with the change of density between the column and the transport line providing the driving force for the flow of the dense phase in the transport line.

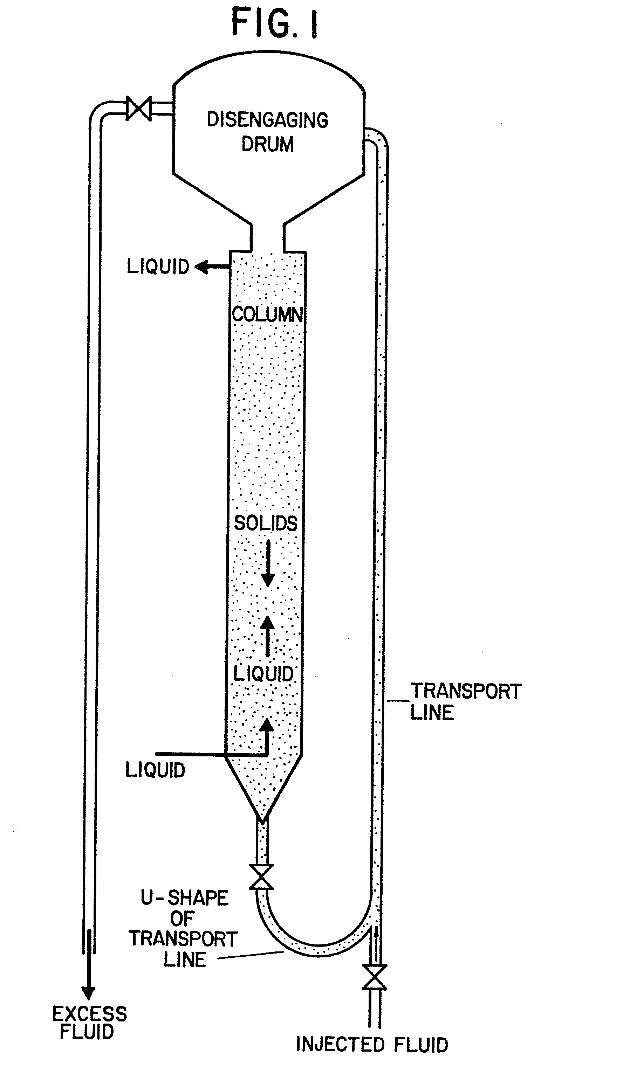

BRIEF DESCRIPTION OF THE DRAWING

Figure I represents a vertical cross-sectional view of a column containing a fluidized bed with a transport line which lifts a dense phase of solid particles from the bottom of the column to the top of the column.

DETAILED DESCRIPTION OF THE INVENTION

The transportation of fluid solid particles from the bottom of one column to the top of the same or a different column has typically been achieved by injecting into the transport line a gas under high pressure to force the fluid solids along at considerable velocity. This technique typically results in substantial attrition of the solid particles due to the considerable force of impact of collisions between the solid particles and the transport tube and between the solid particles themselves. By this invention, a hydraulic lift process is achieved which transports the particles from the bottom of one column to the top of the same or a different column in a gentle manner thus substantially decreasing the attrition of solid particles. By hydraulic what is meant is that a liquid is used to move or drag the solid particles upwards.

This invention achieves a gentle and uniform movement of a dense phase of solid particles in a liquid medium by the critical combination of a transport line configuration and applying a pressure balance between the column and transport line by injecting a relatively small amount of fluid containing liquid into the transport line to reduce the density of solid particles to provide sufficient pressure to lift the solids to the top of the column. This process significantly reduces the handling of the solid particles as compared to a mechanical pump and increases the uniformity of flow while significantly reducing the velocity of the solid particles as compared to a pneumatic transport thereby reducing attrition to the particles. In addition, as a hydraulic process is employed to convey the solid particles in a liquid medium, the liquid itself acts to cushion the collisions of the solid particles thereby reducing attrition.

In general the solid particles to be transported can vary in shape, e.g. a sphere, cylinder or disc. The particles will generally have a particle size in the range of 50 to 1000 microns, preferably 100 to 400 microns and a bulk density of 0.5 to 2.0 gms. per cubic cm, preferably 0.8 to 1.5 grams per cubic cm.

The pressure balance between the column and the transport line can be defined as the pressure head available in the main column should equal to the pressure head required in the transport line to transport solids. The pressure head available in the main column and the pressure head required in the transport line can be defined by the following equations:

$$\Delta P_t.col = \Delta P_h - \Delta P_v - \Delta P_{f1} - \Delta P_{f2}$$

$$\Delta P_t.tr = \Delta P_h + \Delta P_v + \Delta P_{f1} + \Delta P_{f2} + \Delta P_{va}$$

Where  $\Delta P_t.col$ = Pressure head available in main column

$\Delta P_t.tr$ = Pressure head required in transport line

$\Delta P_h$ = static head

$\Delta P_v$ = velocity head losses

$\Delta P_{f1}$ = friction loss between fluid and pipe

$\Delta P_{f2}$ = friction loss between solids and pipe, between solids and fluid, and between solids and solids.

$\Delta P_{va}$ = Pressure drop across the valves

Referring to Figure I the critical configuration of the transport line can be readily seen. The solid particles from the column are continuously fed into the transport line. The transport line is initially directed downward to accept the particles from the column with the transport line then having a smooth curved U-shape at the bottom to redirect the flow of the solids to the top of the column. The transport line can be redirected up inside the column, although the transport line is preferably outside the column as shown in Figure I. The radius of the U-shape of the bottom of the transport line is generally from 0.5 to 20 preferably 1 to 5 times the radius of the main column, and the diameter of the transport line is generally 0.03 to 0.9, preferably 0.03 to 0.25 times the diameter of the main column to facilitate the uniform flow of the dense phase. Preferably, the bottom of the transport line has no substantially flat horizontal surface which aids in preventing the accumulation of solid particles thus promoting uniform flow.

This smooth curved U-shape of the transport line is critical to preventing attrition which is caused in the angular or V-shaped junctures of the transport systems common in the prior art. The U-shape permits the dense phase of solid particles to flow uniformly and prevents interruptions of flow, as compared to the transport systems of the prior art in which at the angular juncture of the transport line an injection of gas or liquid under high pressure is made which forces the particles along at higher velocity causing collisions with-slower moving solid particles resulting in attrition, as well as causing suction or vacuum in the transport line at the angular juncture which interrups the flow of the solid particles.

Also important to the configuration of the transport line is the injection of the fluid which is carried out in the direction of flow of the dense phase of solid particles. This injection of fluid is carried out in a manner which does not interrupt the flow of the solids in the transport line and although it can be injected midway up the transport line, it is preferably made at a tangent to the curve of the U-shape of the transport line, preferably at the bottom or upward curve of the U-shape. Single or multiple injection can be used.

Key to this invention is the pressure balance which is maintained between the column and the transport line. This pressure balance provides the major driving force for the flow of the dense phase of solid particles in the transport line which is carried out by injecting a relatively small but effective amount of a fluid into the dense phase in the transport line effective to reduce the density of the solid particles in the dense phase to provide sufficient pressure in the transport line to lift the solids to the top of the column. Critically, it is the change of density of the solids in the dense phase which provides the driving force for the flow of solid particles in the transport line. While the fluid must be injected at a sufficient pressure to allow the fluid to enter the transport line, this pressure and velocity of the injected fluid is not sufficiently high to cause interruption of the flow of the dense phase in the line thereby causing significant attrition of the solid particles. Preferably the velocity of the fluid injected into the transport line is not significantly higher than the velocity of the solid particles in the transport line and the pressure at which the fluid is injected into the transport line is 1.1 to 2.0 times the injection point pressure in the transport line. Significantly, the fluid velocity or pressure under which the fluid is injected to the transport line will provide only a minor driving force to lift the solid particles to the top of the column. The major driving force to lift the solids is the drag force of the liquid on the solids provided by the pressure differences between the main column and transport line which is achieved by the reduction of density of solid particles in the transport line.

This invention provides a process for transporting a dense phase of solid particles in a liquid medium. This dense phase contains solid particles at a level of at least 20 % by volume of the dense phase, preferably 40 to 60 %. When fluid is injected into the transport line, the density of the dense phase is substantially reduced to a level of at least 5 %, preferably 15 to 35 % by volume of solid particles in the dense phase. The fluid contains liquid, but can additionally contain gas. Preferably when the liquid is injected, the level of solid particles in the dense phase is reduced by 15 to 75 % by volume. The liquid which is injected can have a viscosity ranging from 0.1 to 2.0, preferably 0.5 to 1.5 centipoise with a specific gravity generally ranging from 0.1 to 2.0, preferably 0.4 to 1.0 gms/cubic cm.

Through the lift process of this invention, the velocity at which the particles are transported is significantly reduced compared to pneumatic transport systems. While the flow of the dense phase in the transport line is at a velocity greater than the terminal velocity, i.e. a velocity sufficient to lift or drag the solid particles to the top of the column, the velocity is minimized to reduce the attrition of the solid particles. The flow velocity of the dense phase in the transport line is generally at a linear velocity of between 0.1 and 60 cm per second and preferably of between 1 and 30 cm per second, it being understood that this flow velocity of the dense phase is dependent upon the diameter of the transport line and the amount of solid particles to be transported.

The hydraulic lift process for transporting a dense phase of solids in a liquid medium is suited for recycling solid particles to be reused in processes such as a catalytic process (the catalyst is the solid particle) and an adsorption-desorption separation process (the adsorbent is the solid particle). The hydraulic lift process is particularly suited for processes employing fluidized beds of solid particles, especially a controllably transported magnetically stabilized fluidized bed where the solid particles are magnetizable (e.g. contain a ferromagnetic component).

EXAMPLE 1

A comparison between a pneumatic conveying system and the hydraulic dense phase lift process of this invention is made as follows. Both the hydraulic and pneumatic processes were set up as shown in Figure I. The solid particles moved downwards by gravity in a 2 inch internal diameter X 9 foot (5 cm x 275 cm) column while liquid was injected and moved upwards in the column to create a countercurrent fluidized moving bed system. In the column, the density of the solid particles in the liquid phase was 50 % by volume with the solid particles flowing downward at a linear velocity of 5.1 cm/min. The solid particles which were used passed through a 60 mesh U.S. Standard screen but were retained on a 200 mesh U.S. Standard screen and had a density of 0.95 gms/cubic cm. The liquid used in the column was a mixture of 25 wt. % toluene and 75 wt. % paraffins $(C_{12}-C_{15})$ and the liquid flow rate in the column was 70 cc/min. The operating temperature was ambient. At the bottom of the column the solids were lifted back to the top of the column by a 1/2 inch (1.3 cm) diameter transport line with a radius for the curved U-shaped bottom of the transport line of 7 inches (17.8 cm).

The pneumatic conveying process injected nitrogen into the transport line at a flow rate of 0.0085 standard $M^3$/min., this pressure being chosen to provide sufficient force to lift the solids in the transport line while maintaining the linear velocity of the particles in the column. The resultant linear velocity of the solid particles in the transport line was 37 cm/sec and the density of the solid particles in the transport line was 1 % by volume.

The hydraulic dense phase lift process injected liquid (25 wt. % toluene and 75 wt. % paraffins) creating a liquid flow rate in the transport line of 100 cc/min., while maintaining the linear velocity of the particles in the column. The resultant linear velocity of the solid particles in the transport line was 2 cm/sec. and the density of the solid particles in the transport line was 34 % by volume.

The following is a comparison of the size distribution of fresh sieve and used sieve after 80 hours of circulation with the hydraulic lift process as compared to a pneumatic conveying system. The size distribution of each samples was measured by a mesh screening test (all U.S. Standard sieves).

### Hydraulic Lift Process

|              | Fresh Sieve (%) | Used Sieve (%) |
|--------------|-----------------|----------------|
| 40 Mesh +    | 0.7             | 2.0            |
| 40-60 Mesh   | 9.6             | 13.6           |
| 60-80 Mesh   | 33.3            | 32.1           |
| 80-100 Mesh  | 24.3            | 22.1           |
| 100-200 Mesh | 31.3            | 29.4           |
| 200 Mesh -   | 0.8             | 0.8            |

### Pneumatic Conveying Process

|              | Fresh Sieve (%) | Used Sieve (%) |
|--------------|-----------------|----------------|
| 40 Mesh +    | 0.2             | 0.1            |
| 40-60 Mesh   | 0.3             | 0.2            |
| 60-80 Mesh   | 34.6            | 29.2           |
| 80-100 Mesh  | 27.7            | 25.7           |
| 100-200 Mesh | 36.9            | 44.2           |
| 200 Mesh -   | 0.3             | 0.6            |

The above comparison demonstrates the minimal attrition of solid particles with the hydraulic dense phase lift process of this invention as compared to the substantial attrition of solid particles with a pneumatic conveying system.

CLAIMS

1.   A hydraulic lift process for continuously
and uniformly transporting a dense phase of solid particles in a liquid medium from the bottom of a column to
the top of a column while minimizing the attrition of the
solid particles comprising:

continuously feeding the dense phase from the
bottom of the column to a transport line, said dense phase
in the column containing solid particles at a level of at
least 20 % by volume, said transport line initially directed downward and having a smooth curved U-shape at the
bottom to direct the flow of the solids to the top of
the column; and

maintaining a continuous uniform flow of the
dense phase in the transport line by injecting into the
transport line in the direction of flow an amount of a
liquid effective to reduce the density in the transport line
of solid particles in the dense phase to a level of at
least 5% by volume to provide sufficient pressure in
the transport line to lift the solids to the top of the
column, with the change in density of the dense phase of
the transport line from the dense phase of the column providing the driving force for the flow of the particles in
the transport line to the top of the column.

2.   Process of Claim 1 wherein the liquid injected
into the transport line also contains gas.

3.   Process of Claim 1 wherein the liquid injected
into the transport line reduced the level of solid particles
in the dense phase by 15 to 75 % by volume.

4.   Process of Claim 3 wherein the dense phase
has a level of solid particles of from 40 to 60 % by
volume of the dense phase and when the liquid is injected
the dense phase is reduced to a level of from 15 to 35 %
by volume of solid particles in the dense phase.

5. Process of Claim 4 wherein the liquid is injected into the transport line in the direction of flow of the dense phase at a tangent to the curve of the U-shaped section of the transport line.

6. Process of Claim 4 wherein the flow of the dense phase in the transport line is at a velocity sufficient to lift the solid particles to the top of the column, with the flow velocity being minimized to reduce the attrition of the solid particles.

7. Process of Claim 1 wherein the flow of the dense phase in the transport line is at a linear velocity of between 0.1 cm/second and 60 cm/second.

8. Process of Claim 6 wherein the flow of the dense phase in the transport line is at a linear velocity of between 1 cm/second and 30 cm/second.

9. Process of Claim 8 wherein the bottom of the transport line has no substantially flat horizontal surface.

10. Process of Claim 9 wherein the radius of the smooth curved U-shape of the bottom of the transport line is from 0.5 to 20 times the radius of the main column.

11. Process of Claim 10 wherein the diameter of the transport line is from 0.03 to 0.9 times the diameter of the main column.

12. Process of Claim 5 wherein the particles have a size ranging from 50 to 1000 microns.

13. Process of Claim 1 wherein the pressure balance between the column and the transport line is the pressure head available in the main column is equal to the pressure head required in the transport line to transport solids.

14. Process of Claim 1 wherein solid particles from the column are magnetizeable particles which are controllably transported in the column in a magnetically stabilized fluidized bed.

15. Process of Claim 13 wherein said particles are adsorbents and an adsorption-desorption separation process takes place in the column.

16. Process of Claim 13 wherein said particles are catalysts and a catalytic process takes place in the column.

FIG. I

1 / 1

0129999

DISENGAGING DRUM

LIQUID

COLUMN

SOLIDS

LIQUID

LIQUID

TRANSPORT LINE

U-SHAPE OF TRANSPORT LINE

EXCESS FLUID

INJECTED FLUID